# EUROPEAN PATENT SPECIFICATION

(11) **EP 2 336 603 B1**
(45) Date of publication and mention of the grant of the patent: **23.01.2013**
(21) Application number: 10193297.8
(22) Date of filing: 01.12.2010
(51) Int. Cl.: F16H 63/42, F16H 61/02

(54) **Control apparatus and control method for vehicle**
Steuervorrichtung und Steuerverfahren für ein Fahrzeug
Appareil et procédé de contrôle pour véhicule

(30) Priority: 15.12.2009 JP 2009284602
(43) Date of publication of application: 22.06.2011
(73) Proprietor: Toyota Jidosha Kabushiki Kaisha, Toyota-shi, Aichi 471-8571 (JP)
(72) Inventor: Kato, Junichi, Toyota-shi Aichi 471-8571 (JP); Ito, Mitsuharu, Toyota-shi Aichi 471-8571 (JP)
(74) Representative: TBK

(56) References cited:
- EP-A1- 1 939 497
- EP-A2- 1 386 776
- EP-A2- 2 075 493
- DE-A1- 19 755 470
- DE-A1- 19 902 949
- DE-A1-102007 056 883

## Description

### BACKGROUND OF THE INVENTION

### 1. Field of the Invention

The invention relates to a control apparatus and control method for a vehicle provided with a shift indicator that indicates to a driver a shift operation into an optimum speed or a shift range of the transmission.

### 2. Description of the Related Art

Vehicles provided with a transmission in which a speed or shift range (hereinafter when not specified, the term speed includes the concept of shift range) is changed by a shift operation performed by a driver, such as an automatic transmission or an automatic transmission with a manual shift mode, and a shift indicator that indicates a shift operation into the optimum speed selected based on the running state of the vehicle to the driver, are well known. Japanese Patent Application Publication No. 2003-19912 (JP-A-2003-19912), for example, describes such technology. JP-A-2003-19912 describes a shift information display and a shift information generating method that provides a driver with shift information of a transmission, taking into account the operating mode of an internal combustion engine capable of generating the required torque.

Also, with regards to operating a vehicle in an efficient state, Japanese Patent Application Publication No. 2000-221070 (JP-A-2000-221070), for example, describes a drive unit control method and apparatus that controls a drive unit so that it operates at an efficiency that is as close as possible to optimum efficiency by flashing a tank low level lamp when a value indicative of the tank fluid level and/or the remaining running distance falls below a threshold value. Also, Japanese Patent Application Publication No. 2001-27321 (JP-A-2001-27321) describes a shift position indictor of a hybrid vehicle in which control is performed to increase the load on the engine side of the vehicle driving force and reduce the load on the motor, by flashing a downshift indicator lamp that prompts the driver to downshift when the state-of-charge (SOC) of the battery becomes low, and having the driver perform a downshift in response to the flashing downshift indicator lamp. Also, Japanese Patent Application Publication No. 2008-215507 (JP-A-2008-215507) describes a transmission shift indicator that indicates to a driver a shift into a target gear when the fuel consumption in the current gear is greater than the fuel consumption in the target gear. Further, Japanese Patent Application Publication No. 2007-283907 (JP-A-2007-283907) describes a vehicular manual shift operation indicator provided with both an indicator lamp that indicates the shift direction for realizing an eco running mode and an indicator lamp that indicates the shift direction for realizing a sport running mode. Also, Japanese Patent Application Publication No. 10-9006 (JP-A-10-9006) describes a vehicle control apparatus that shifts the driving force characteristic to a high fuel efficiency mode, e.g., shifts into a gear speed that is higher than normal, when the difference between the reachable distance calculated based on the amount of fuel remaining in the fuel tank and the distance to a fuel supply facility (i.e., the drivable distance to spare) is equal to or less than a predetermined value.

Here, typically, a so-called shift line graph for selecting the optimum speed based on the running state of the vehicle is set in advance to enable driving in a speed that achieves both fuel efficiency ( which is unanimous with the amount of carbon dioxide (CO₂) emitted) performance and running performance (i.e., power performance), i.e., to enable driving with good fuel efficiency while obtaining sufficient vehicle performance, after satisfying a reference value for so-called emission regulations that regulate the amount of exhaust gases such as NOₓ (oxides of nitrogen) emitted, for example. Therefore, the vehicle is able to be driven with good fuel efficiency while obtaining sufficient vehicle performance by running using the speed indicated by the shift indicator, i.e., by the driver performing a shift operation according to an indication from the shift indicator. That is, the vehicle is able to be run with a running pattern (i.e., a shift pattern) similar to that of an automatic transmission in which shifts are performed according to shift lines, so fuel efficiency is easily improved.

Assuming that the amount of exhaust gas emitted falls below the predetermined exhaust gas reference value, for example, the shift line graph is set such that a speed at which the optimum fuel efficiency is achieved without sacrificing power performance or noise and vibration (NV) performance, for example, is selected, so when power performance and the like is allowed to be sacrificed, it is possible that the speed that realizes the best fuel efficiency may not necessarily be obtained. Also, with the shift indicator described above, a shift indication is made uniformly based on the shift line graph, so it might not be able to handle a vehicle state in which the driver wants to select a speed that gives top priority to improving fuel efficiency even if it means sacrificing power performance and the like. This type of problem is not well known, and there have not yet been any proposals for technology that indicates to a driver a shift operation into a speed that gives top priority to improving fuel efficiency even if it means sacrificing power performance and the like. Incidentally, there are cases in which a trade-off is made between CO₂ and NOₓ because the regions where each is good in the engine operating range differ, for example. Therefore, when a speed to obtain the best fuel efficiency is set unconditionally, the predetermined exhaust gas reference value for NOₓ and the like may not be satisfied. It goes without saying that the speed that obtains the best fuel efficiency while satisfying the exhaust gas reference value is clearly the speed that will be set.

EP 2 075 493 A2 discloses a control apparatus according to the preamble of claim 1 and a control method according to the preamble of claim 12.

### SUMMARY OF INVENTION

The invention thus provides a vehicle control apparatus and control method capable of indicating a shift operation into the optimum speed or shift range to a driver appropriately according to the vehicle state.

A first aspect of the invention relates to a control apparatus for a vehicle provided with a transmission in which a speed or shift range is changed by a shift operation performed by a driver, and a shift indicator that indicates a shift operation into an optimum speed or shift range selected based on a running state of the vehicle to the driver. This control apparatus selects, based on the running state of the vehicle, a speed or shift range set in advance such that priority is given to fuel efficiency performance over power performance as the optimum speed or shift range, if it is determined that an amount of fuel remaining in a fuel tank is low.

A second aspect of the invention relates to a control method for a vehicle provided with a transmission in which a speed or shift range is changed by a shift operation performed by a driver, and a shift indicator that indicates a shift operation into an optimum speed or shift range selected based on a running state of the vehicle to the driver. This control method includes determining whether an amount of fuel remaining in a fuel tank is low; and selecting, based on the running state of the vehicle, a speed or shift range set in advance such that priority is given to fuel efficiency performance over power performance as the optimum speed or shift range, if it is determined that the amount of fuel remaining in a fuel tank is low.

According to the first and second aspects described above, if it is determined that the amount of fuel remaining in the fuel tank is low, a speed or shift range set in advance such that priority is given to fuel efficiency performance over power performance is selected as the optimum speed or shift range based on the running state of the vehicle. Therefore, when the amount of fuel remaining in the fuel tank is low, a shift operation into a speed or shift range that gives priority to fuel efficiency performance over power performance is indicated to the driver. Having the driver perform a shift operation into that indicated speed or shift range enables the drivable distance (i.e., the distance that the vehicle is able to travel) corresponding to the amount of fuel remaining to be increased. In addition, when the amount of fuel remaining is high, a shift operation into a speed or shift range that achieves both fuel efficiency performance and power performance, for example, is indicated to the driver. Having the driver perform a shift operation into that indicated speed or shift range makes it possible to appropriately ensure power performance without reducing fuel efficiency. In this way, a shift operation into the optimum speed or shift range can be appropriately indicated to the driver according to the vehicle state, e.g., the amount of fuel remaining in the fuel tank.

Incidentally, as described in JP-A-10-9006 above, a proposal has been made to shift into a higher gear speed than normal when the drivable distance to spare has become short. However, this only achieves better fuel efficiency than normal and is not a shift into a speed that gives top priority to improving fuel efficiency. That is, with the automatic transmission that does not have a manual shift mode, such as that described in JP-A-10-9006, a speed that gives top priority to improving fuel efficiency even if it means sacrificing power performance and the like is unable to be selected because merchantability will decrease if the transmission automatically shifts into a speed in which the power performance and NV performance significantly decrease. In contrast, this invention simply gives a shift indication but does not automatically shift the transmission into the selected optimum speed. Therefore, the shift operation into that speed is ultimately performed at the discretion of the driver, so it is possible to select a speed that gives top priority to improving fuel efficiency even if it means sacrificing power performance and the like.

In the control apparatus described above, the speed or shift range set in advance such that priority is given to fuel efficiency performance over power performance may be a speed or a shift range set in advance on the high vehicle speed side compared to the optimum speed or shift range selected when it is not determined that the amount of fuel remaining in the fuel tank is low. Therefore, a shift operation into speed or shift range on the higher vehicle speed side is more apt to be indicated to the driver when the amount of fuel remaining in the fuel tank is low than when it is not determined that the amount of fuel remaining in the fuel tank is low. Having the driver perform a shift operation into the indicated speed or shift range makes it reliably possible to increase the drivable distance (i.e., the distance that the vehicle is able to travel) that corresponds to the amount of fuel remaining.

In the control apparatus described above, it may be determined that the amount of fuel remaining is low when the amount of fuel remaining in the fuel tank is equal to or less than a predetermined amount. Accordingly, it is appropriately determined that the amount of fuel remaining is low, and a speed or shift range set in advance such that priority is given to fuel efficiency performance over power performance is appropriately selected as the optimum speed or shift range based on the running state of the vehicle.

In the control apparatus described above, it may be determined that the amount of fuel remaining is low when a drivable distance calculated based on the amount of fuel remaining is equal to or less than a predetermined distance, when the amount of fuel remaining in the fuel tank is not equal to or less than the predetermined amount. Accordingly, it can be even more appropriately determined that the amount of fuel remaining is low.

In the control apparatus described above, it may be determined that the amount of fuel remaining is low when a drivable distance calculated based on the amount of fuel remaining in the fuel tank is equal to or less than a predetermined distance. Accordingly, it is appropriately determined that the amount of remaining fuel is low, so a speed or shift range set in advance such that priority is given to fuel efficiency performance over power performance is appropriately set as the optimum speed or shift range based on the running state of the vehicle.

In the control apparatus described above, it may be determined that the amount of fuel remaining is low when the amount of fuel remaining in the fuel tank is equal to or less than a predetermined amount, when the drivable distance is not equal to or less than the predetermined distance or when the drivable distance is not able to be calculated. Accordingly, it can be even more appropriately determined that the amount of fuel remaining is low.

In the control apparatus described above, the driver may be notified that the amount of fuel remaining is low when it is determined that the amount of fuel remaining in the fuel tank is low. Accordingly, the driver is reliably notified that the amount of fuel remaining is low, so the driver is appropriately notified that the current shift operation indication is an indication of a shift operation into a speed or shift range such that priority is given to fuel efficiency performance over power performance.

In the control apparatus described above, the shift indicator may display a shift operation indication to change the actual speed or shift range to the optimum speed or shift range when the actual speed or shift range of the transmission is different than the optimum speed or shift range. Accordingly, a shift operation into the optimum speed or shift range selected based on the running state of the vehicle is appropriately indicated to the driver.

In the control apparatus described above, if a determination is made to not execute the fuel efficiency priority indication control that indicates, based on the running state of the vehicle, a speed or shift range set in advance such that priority is given to fuel efficiency performance over power performance as the optimum speed or shift range, when it is determined that the amount of fuel remaining in the fuel tank is low, a speed or shift range when it is not determined that the amount of fuel remaining in the fuel tank is low may be selected as the optimum speed or shift range. Therefore, a speed or shift range set in advance such that priority is given to fuel efficiency performance over power performance and a normal speed when it is not determined that the amount of fuel remaining in the tank is low are appropriately indicated.

The control apparatus may also include a cancel switch that is operated to select whether to execute the fuel efficiency priority indication control, and a determination may be made to not execute the fuel efficiency priority indication control when the cancel switch is operated. Accordingly, a speed or shift range selected in advance such that priority is given to fuel efficiency performance over power performance according to the intention of the driver, for example, and a normal speed or shift range when it is not determined that the amount of fuel remaining in the fuel tank is low are appropriately indicated.

In the control apparatus described above, a determination may be made to not execute the fuel efficiency priority indication control when it is determined that an actual shift operation by the driver does not follow the shift operation indication. Accordingly, a speed or shift range set in advance such that priority is given to fuel efficiency performance over power performance and a normal speed or shift range when it is not determined that the amount of fuel remaining in the fuel tank is low are appropriately indicated.

Also, the vehicle is preferably structured such that power from the driving force source is transmitted to the driving wheels via the transmission. Also, the transmission is, for example, a manual transmission in which shifting is executed in response to a shift operation performed by the driver, or an automatic transmission that has a known manual shift mode, in which the speed or shift range is able to be changed in response to a shift operation performed by the driver. Also, the manual transmission is formed by a synchronous mesh parallel two-shaft transmission or the like that has a plurality of pairs of shifting gears that are in constant mesh provided between two shafts, and that places one of the plurality of pairs of shifting gears in a power transmitting state with a synchronizer. Also, the automatic transmission may be formed by, for example, a) a known planetary gear type automatic transmission that has a plurality of speeds, b) a synchronous mesh parallel two-shaft automatic transmission that is a synchronous mesh parallel two-shaft automatic transmission like that described above but that is capable of automatically changing speeds with a synchronizer that is driven by a hydraulic actuator, c) a so-called DCT (Dual Clutch Transmission) that is a type of transmission that is a synchronous mesh parallel two-shaft automatic transmission like that described above but that has two systems of input shafts and is structured such that a clutch is connected to the input shaft of each system and one system is linked to the even speeds and the other system is linked to the odd speeds, d) a so-called belt type continuously variable transmission in which the a drive belt is wound around a pair of variable pulleys and the speed ratio is continuously changed in a stepless manner, e) a so-called traction type continuously variable transmission structured such that a plurality of individual rollers in which the rotational centers that intersect the axis of a pair of cones that rotate about a common axis are able to be pivoted are pressed between the pair of cones, in which the speed ratio is varied by changing the angle of intersection between the rotational centers of the rollers and the axis of the pair of cones, f) an automatic transmission that includes a differential mechanism formed by a planetary gear set, for example, that distributes power from an engine to a first electric motor and an output shaft, and a second electric motor provided on the output shaft of that differential mechanism, and that functions as an electric continuously variable transmission in which the speed ratio is electrically changed by mechanically transmitting most of the power from the engine to the driving wheel side by the differential operation of the differential mechanism and electrically transmitting the rest of the power from the engine using an electric path from the first electric motor to the second electric motor, or g) an automatic transmission mounted in a so-called parallel type hybrid vehicle in which an electric motor is provided so as to be able to transmit power to an engine shaft and an output shaft and the like. Also, a diesel engine or a gasoline engine such as an internal combustion engine that generates power by combusting fuel, for example, is preferably used as the driving force source. Alternatively, however, another prime mover such as an electric motor may also be used either alone or in combination with the engine.

### BRIEF DESCRIPTION OF DRAWINGS

The features, advantages, and technical and industrial significance of this invention will be described in the following detailed description of example embodiments of the invention with reference to the accompanying drawings, in which like numerals denote like elements, and wherein:
FIG 1 is a view of a power transmission device that makes up part of a vehicle to which example embodiments of the invention may be applied, and the main portions of a control system provided in the vehicle;
FIG. 2 view of an example of an indicator that includes a shift indicator according to the invention;
FIG. 3 is a functional block line diagram of the main control functions of an electronic control unit according to the invention;
FIG. 4 is a view of an example of a shift line graph used when calculating a required speed;
FIG. 5 is a view of an example of an actual speed calculating map used when calculating an actual speed according to the invention;
FIG. 6 is a view of an example of a shift line graph set in advance such that a required speed that is on the relatively high vehicle speed side is selected compared with the shift line graph in FIG. 4;
FIG. 7 is a flowchart illustrating the main portions of a control operation of the electronic control unit according to the invention, i.e., a control operation for indicating a shift operation into the optimum speed to a driver appropriately according to the vehicle state;
FIGS. 8A, 8B, and 8C are views of examples of shift indicators that are different than the shift indicator shown in FIG. 2 and the like, according to the invention; and
FIG. 9 is a view of an example of a shift operation apparatus used in an automatic transmission having a manual shift mode, according to the invention.

### DETAILED DESCRIPTION OF EMBODIMENTS

Hereinafter, example embodiments of the invention will be described in detail with reference to the accompanying drawings.

### [First example embodiment]

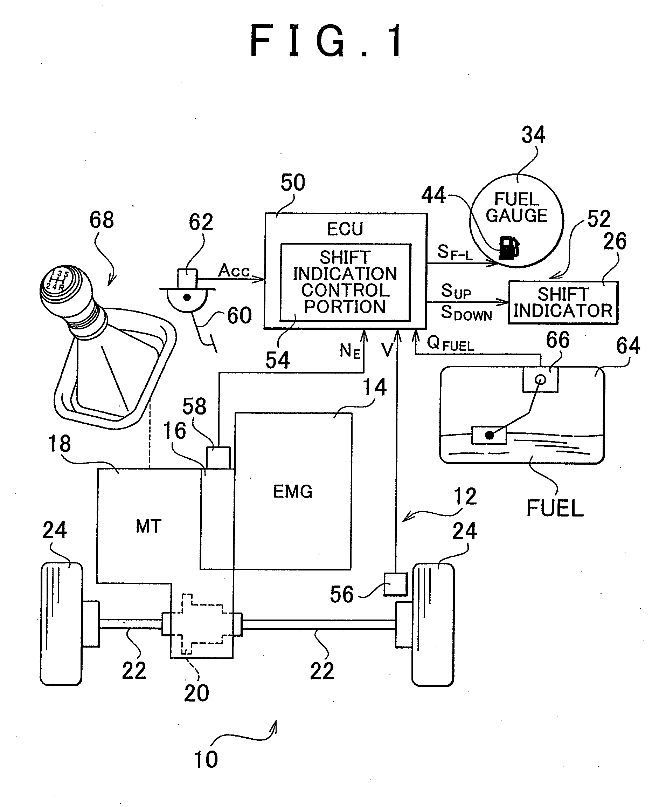

FIG. 1 is a view of a power transmission device 12 that makes up part of a vehicle 10 to which the invention may be applied, and the main portions of a control system provided in the vehicle 10. The power transmission device 12 in FIG. 1 is for use in a FF (front engine - front drive) vehicle and includes an engine 14 as the power source for running, a clutch 16 that selectively allows and interrupts the transmission of power between the engine 14 and a manual transmission 18, a manual transmission 18 in which the speed or shift range (hereinafter, when not specified, the term speed includes the concept of shift range) is switched by a shift operation performed by a driver using a known shift lever 68, a differential gear unit 20 that rotatably drives a pair of left and right drive shafts 22 while allowing differential rotation, the pair of drive shafts 22, and a pair of driving wheels (e.g., front wheels) 24. The power generated by the engine 14 is transmitted to the pair of driving wheels 24 via the clutch 16, the manual transmission 18, the differential gear unit 20, and the pair of drive shafts 22 and the like.

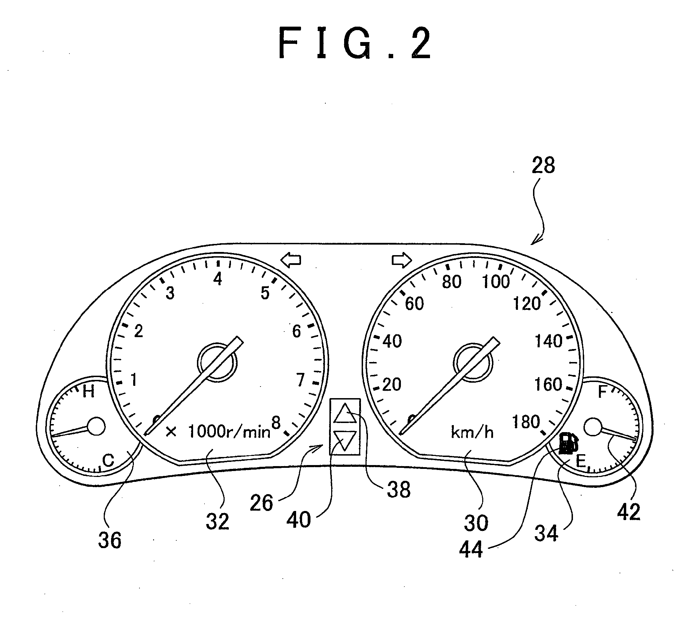

A shift indicator 26 is provided near the driver's seat and displays an indication of a shift operation with the shift lever 68 to the driver. FIG. 2 is a view of an indicator 28 that includes this shift indicator 26. As shown in FIG. 2, the indicator 28 includes, in addition to the shift indicator 26, a speedometer 30 that indicates the vehicle speed V [km / h], a tachometer 32 that indicates the engine speed N_{E} [rpm], a fuel gauge 34, and a coolant temperature gauge 36 and the like.

The shift indicator 26 includes, for example, an upshift indicator lamp 38 for indicating an upshift to the driver, and a downshift indicator lamp 40 for indicating a downshift to the driver. The upshift indicator lamp 38 has a triangular shape with one corner pointing upward from the view of the driver, i.e., pointing toward the top of the paper on which FIG. 2 is drawn, and flashes in response to an upshift indication signal S_{UP} supplied from an electronic control unit (ECU) 50 that will be described later. Also, the downshift indicator lamp 40 has a triangular shape with one corner pointing downward from the view of the driver, i.e., pointing toward the bottom of the paper on which FIG. 2 is drawn, and flashes in response to a downshift indication signal S_{DOWN} supplied from the ECU 50. Also, the upshift indicator lamp 38 and the downshift indicator lamp 40 are displayed with semiconductor elements, i.e., light emitting diodes (LED), that emit light when current flows through them, for example. Incidentally, when neither the upshift indicator lamp 38 nor the downshift indicator lamp 40 is illuminated, it indicates to the driver that the current speed is to be maintained.

The fuel gauge 34 includes, for example, an indicator needle 42 that indicates to the driver the amount (i.e., the fuel level) Q_{FUEL} of fuel FUEL remaining in a fuel tank 64, and a low fuel warning lamp 44 that notifies the driver that the fuel level Q_{FUEL} is low, i.e., indicates to the driver that the amount of fuel level Q_{FUEL} is low. The rotation angle, direction, and speed of the indicator needle 42 are controlled according to a drive signal supplied from the ECU 50, such that the position of the indicator needle 42 changes with respect to a scale inside the fuel gauge 34 to indicate the fuel level Q_{FUEL}. Also, the low fuel warning lamp 44 is shaped like a fuel supply station, for example, and illuminates in response to a low fuel warning signal S_{F-L} from the ECU 50. The low fuel warning lamp 44 may be displayed in yellow by LED, for example.

Returning now to FIG. 1, the vehicle 10 is provided with the ECU 50 that includes a control unit for a vehicle provided with the manual transmission 18 and a gear shift indicator (GSI) 52 (hereinafter referred to as shift indicator 52) that has the shift indicator 26 and indicates to the driver a shift operation into an optimum speed selected based on the running state of the vehicle 10 using a shift lever 68. This ECU 50 is formed by a so-called microcomputer that includes, for example, a CPU, RAM, ROM, and an input / output interface and the like. The CPU executes various controls of the vehicle 10 by performing signal processing according to programs stored in the ROM in advance while using the temporary storage function of the RAM. For example, the ECU 50 executes output control of the engine 14 and shift indication control that controls the illumination of the upshift indicator lamp 38 and the downshift indicator lamp 40 of the shift indicator 26. When necessary, the ECU 50 may be structured such that the control portion for output control of the engine 14 is separate from a shift indication control portion 54 for shift indication control of the shift indicator 26.

The shift indicator 52 includes the shift indicator 26 and the shift indication control portion 54, for example. The shift indicator 52 calculates the actual speed (gear ratio), i.e., the actual speed G_{REAL}, based on the engine speed N_{E} corresponding to the input shaft rotation speed N_{IN} of the manual transmission 18 and the vehicle speed V corresponding to the output shaft rotation speed N_{OUT} of the manual transmission 18, as well as calculates a required speed (i.e., a target speed ) G_{REQ} based on the vehicle speed V and the accelerator operation amount Acc, and displays a shift operation indication to change the actual speed G_{REAL} to the required speed G_{REQ}.

As shown in FIG. 1, the ECU 50 receives signals from various sensors and gauges and the like. Some of these signals are a signal indicative of the vehicle speed V (i.e., the output shaft rotation speed N_{OUT}) from a vehicle speed sensor 56 that detects the vehicle speed V that corresponds to the output shaft rotation speed N_{OUT}, a signal indicative of the engine speed N_{E} (i.e., the input shaft rotation speed N_{IN}) from an engine speed sensor 58 that detects the engine speed N_{E} that corresponds to the input shaft rotation speed N_{IN}, a signal indicative of the accelerator operation amount Acc from an accelerator operation amount sensor 62 that detects the operation amount, i.e., the accelerator operation amount Acc [%], of an accelerator pedal 60, and a signal indicative of the fuel level Q_{FUEL} from a fuel sender gauge 66 that detects the fuel level Q_{FUEL} in the fuel tank 64.

Also, the ECU 50 outputs various signals, including an upshift indication signal S_{UP} for illuminating the upshift indicator lamp 38, a downshift indication signal S_{DOWN} for illuminating the downshift indicator lamp 40, and a low fuel warning signal S_{F-L} for illuminating the low fuel warning lamp 44.

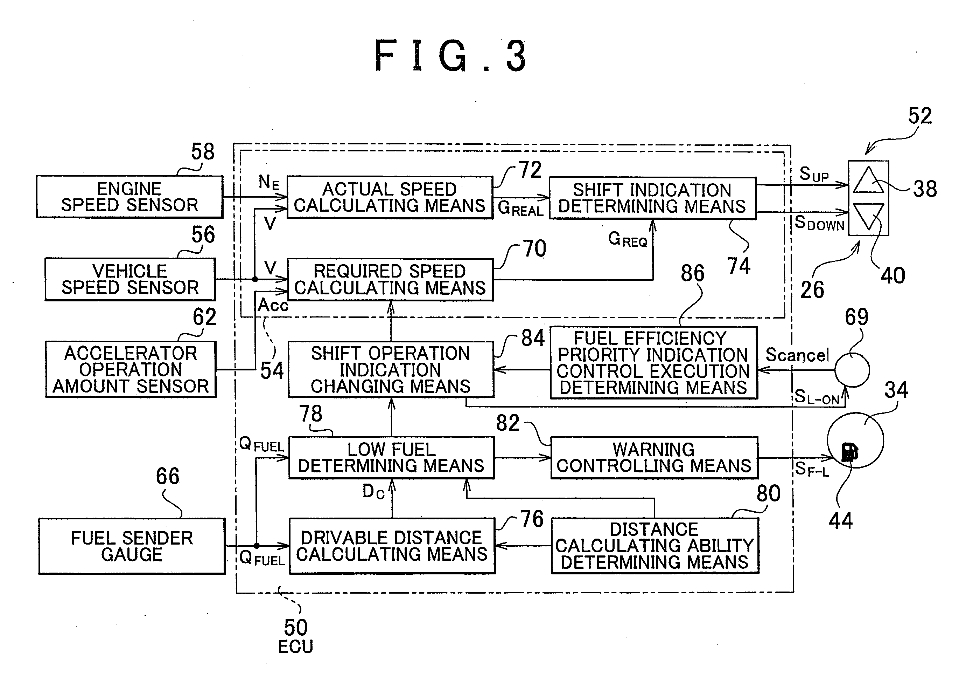

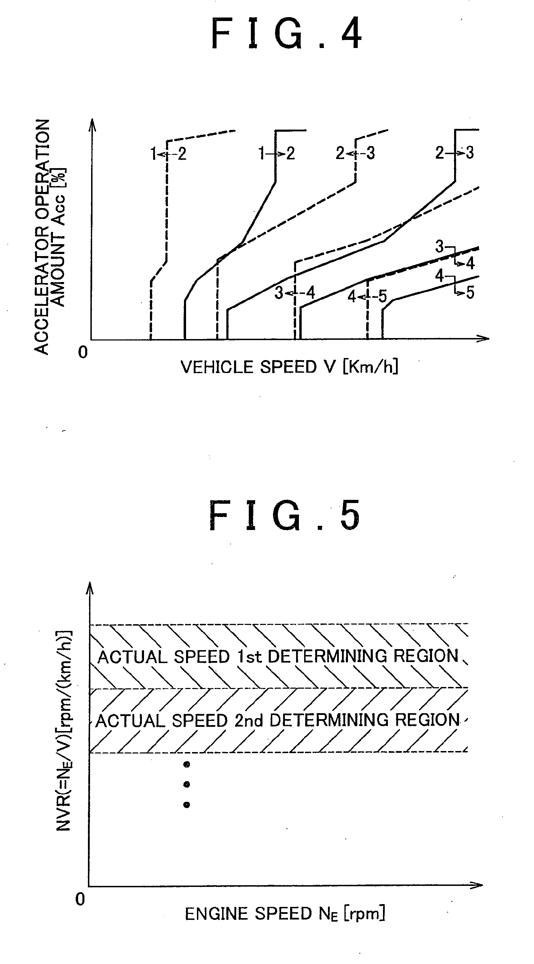

FIG. 3 is a functional block line diagram of the main control functions of the ECU 50. In FIG. 3, a required speed calculating portion, i.e., required speed calculating means 70, calculates the required speed G_{REQ} as the optimum speed into which the manual transmission 18 should be shifted, based on the actual vehicle speed V and the accelerator operation amount Acc, from a pre-stored relationship (i.e., a shift line graph or shift map) made up of a plurality of shift lines set within a two-dimensional coordinate system having a vehicle speed axis and an accelerator operation amount axis such as that shown in FIG. 4, for example. This shift line graph is empirically obtained in advance and set such that fuel efficient driving is possible while obtaining sufficient performance of the vehicle 10, i.e., such that driving is possible in a speed that realizes both fuel efficiency performance and running performance (i.e., power performance). Incidentally, there are various ways to calculate the required speed G_{REQ}, such as based on the throttle valve opening amount, the intake air amount, the road gradient, or the like.

In FIG. 4, deceleration side shift lines (i.e., downshift lines) indicated by the broken lines define the shift timing to the deceleration side and are set between each speed. That is, when a position indicative of the running state of the vehicle 10 specified on the shift line graph based on the actual vehicle speed V and the acceleration operation amount Acc shifts from the region on the right side of a deceleration side shift line to the region on the left side of the deceleration side shift line, the required speed calculating means 70 determines that a shift to the deceleration side, i.e., a downshift, should be performed, and sets the speed corresponding to the deceleration side shift line as the required speed G_{REQ}. More specifically, when a position specified on the shift line graph based on the actual vehicle speed V and the acceleration operation amount Acc crosses the 2 → 1 shift line in FIG. 4 from right to left, for example, the required speed calculating means 70 determines that a shift from second speed to first speed should be performed, and sets first speed as the required speed G_{REQ}. Similarly, when a position specified on the shift line graph crosses the 3 → 2 shift line, the 4 → 3 shift line, or the 5 → 4 shift line from right to left, the required speed calculating means 70 sets second speed, third speed, or fourth speed as the required speed G_{REQ}.

Also, in FIG. 4, acceleration side shift lines (i.e., upshift lines) indicated by the solid lines define the shift timing to the acceleration side and are set between each speed. That is, when a position indicative of the running state of the vehicle 10 specified on the shift line graph based on the actual vehicle speed V and the acceleration operation amount Acc shifts from the region on the left side of an acceleration side shift line to the region on the right side of the acceleration side shift line, the required speed calculating means 70 determines that a shift to the acceleration side, i.e., an upshift, should be performed, and sets the speed corresponding to the acceleration side shift line as the required speed G_{REQ}. More specifically, when a position specified on the shift line graph based on the actual vehicle speed V and the acceleration operation amount Acc crosses the 1 → 2 shift line in FIG. 4 from left to right, for example, the required speed calculating means 70 determines that a shift from first speed to second speed should be performed, and sets second speed as the required speed G_{REQ}. Similarly, when a position specified on the shift line graph crosses the 2 → 3 shift line, the 3 → 4 shift line, or the 4 → 5 shift line from left to right, the required speed calculating means 70 sets third speed, fourth speed, or fifth speed as the required speed G_{REQ}.

Returning now to FIG. 3, the actual speed calculating portion, i.e., the actual speed calculating means 72, calculates the actual speed of the manual transmission 18, i.e., the actual speed G_{REAL}, based on the actual engine speed N_{E} and the vehicle speed V from a relationship, i.e., an actual speed calculating map, empirically obtained in advance and stored that is made up of a plurality of determining regions set in a two-dimensional coordinate system having an engine speed axis and a NVR axis such as that shown in FIG. 5, for example. In FIG. 5, the horizontal axis represents the engine speed N_{E} and the vertical axis represents the NVR value, i.e., the quotient of the engine speed N_{E} divided by the vehicle speed V. Incidentally, the engine speed N_{E} corresponds to the input shaft rotation speed N_{IN} of the manual transmission 18 and the vehicle speed V corresponds to the output shaft rotation speed N_{OUT} of the manual transmission 18. The actual speed calculating means 72 is able to calculate the actual speed G_{REAL} in any of a variety of ways, such as based on the actual input shaft rotation speed N_{IN} of the manual transmission 18 and the actual output shaft rotation speed N_{OUT} of the manual transmission 18 from a pre-stored relationship (i.e., map) with the input shaft rotation speed N_{IN} and the output shaft rotation speed N_{OUT} as parameters.

In the actual speed calculating map shown in FIG. 5, a plurality of determining regions are set for each speed. If a position specified on the actual speed calculating map based on the actual engine speed N_{E} and the actual vehicle speed V is within a first speed determining region, from among the plurality of determining regions, for example, the actual speed calculating means 72 determines that the actual speed G_{REAL} is first speed and thus sets first speed as the actual speed G_{REAL}. Similarly, if a position specified on the actual speed calculating map is within a second speed determining region, a third speed determining region, a fourth speed determining region, or a fifth speed determining region, the actual speed calculating means 72 sets second speed, third speed, fourth speed, or fifth speed as the actual speed G_{REAL}. Incidentally, in the actual speed calculating map in FIG. 5, only the first speed determining region and the second speed determining region are shown; the third speed determining region, the fourth speed determining region, and the fifth speed determining region are not shown.

Returning now to FIG. 3, a shift indication determining portion, i.e., shift indication determining means 74, determines whether to output a predetermined signal to the shift indicator 26, from a preset relationship, for example, based on the required speed G_{REQ} calculated by the required speed calculating means 70 and the actual speed G_{REAL} calculated by the actual speed calculating means 72. This predetermined signal corresponds to the upshift indication signal S_{UP} for illuminating the upshift indicator lamp 38 or the downshift indication signal S_{DOWN} for illuminating the downshift indicator lamp 40. More specifically, the shift indication determining means 74 outputs an upshift indication signal S_{UP} to the shift indicator 26 when the actual speed G_{REAL} is lower than the required speed G_{REQ}. Also, the shift indication determining means 74 outputs a downshift indication signal S_{DOWN} to the shift indicator 26 when the actual speed G_{REAL} is higher than the required speed G_{REQ}. That is, when the actual speed G_{REAL} differs from the required speed G_{REQ}, the shift indicator 52 displays a shift operation indication to change the actual speed G_{REAL} to the required speed G_{REQ}.

Incidentally, when the actual speed G_{REAL} is the same as the required speed G_{REQ}, the shift indication determining means 74 does not output either an upshift indication signal S_{UP} or a downshift indication signal S_{DOWN} to the shift indicator 26. Accordingly, both the upshift indicator lamp 38 and the downshift indicator lamp 40 are turned off. Also, when at least one of the actual speed G_{REAL} or the required speed G_{REQ} is indefinite, the shift indication determining means 74 does not output either an upshift indication signal S_{UP} or a downshift indication signal S_{DOWN} to the shift indicator 26. Accordingly, while at least one of the actual speed G_{REAL} or the required speed G_{REQ} is indefinite, an indication from the shift indicator 26 is temporarily stopped from being output.

Incidentally, a shift line graph such as that shown in FIG. 4 is set in advance to enable driving that is fuel efficient while obtaining sufficient performance of the vehicle 10, as described above. Therefore, a speed that realizes the best fuel efficiency without sacrificing power performance or noise and vibration (NV) performance, for example, is displayed by the shift indicator 52. Thus, it is possible that a speed that realizes the best fuel efficiency may not necessarily be obtained when power performance and the like are allowed to be sacrificed. Also, with the shift indicator 52, a shift indication is given uniformly based on the shift line graph, so it is possible that a speed that gives top priority to improving fuel efficiency even if it means sacrificing power performance and the like may not be able to be indicated to the driver when the vehicle state is such that the fuel level Q_{FUEL} is low. Incidentally, in this example embodiment, it is possible that the driver may not follow the shift operation indication by the shift indicator 26, but instead drive in such a way as to improve fuel efficiency while sacrificing power performance and the like. However, in this case, the driver is driving (i.e., shifting) by his or her own will, so the driver may feel unsure about whether his or her shift operation is really improving fuel efficiency.

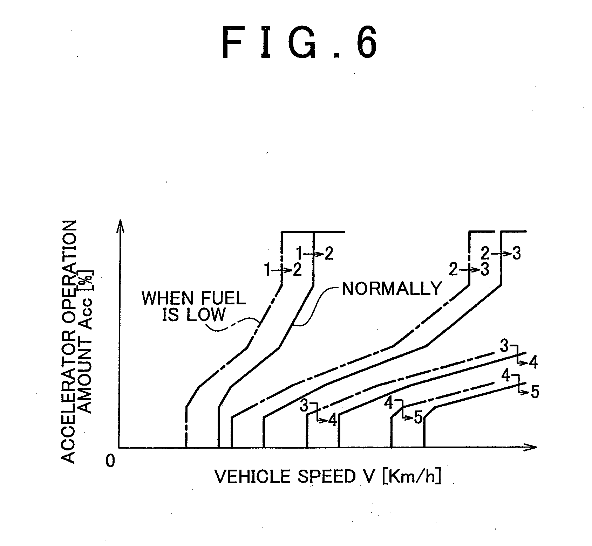

Therefore, in this example embodiment, in order to indicate to the driver a shift operation into the optimum speed appropriately according to the fuel level Q_{FUEL}, if it is determined that the fuel level Q_{FUEL} is low, a speed set in advance such that priority is given to fuel efficiency performance over power performance (e.g., such that fuel efficiency performance is given top priority) is set as the required speed G_{REQ} based on the running state of the vehicle 10. The speed that is set in advance such that priority is given to fuel efficiency performance over power performance is a relatively high vehicle speed side required speed G_{REQ} selected based on a shift line graph (i.e., a low fuel shift line graph) set in advance such that a relatively high vehicle speed side (i.e., high gear ratio side) speed such as that shown in FIG. 6, for example, is selected, compared to a required speed G_{REQ} selected based on a shift line graph (i.e., a normal shift line graph) such as that shown in FIG. 4 that is normally used when it is not determined that the fuel level Q_{FUEL} is low, for example.

In FIG. 6, the upshift lines indicated by the solid lines are the normal upshift lines shown in FIG. 4, for example, that normally are used. Also, the upshift lines indicated by the alternate long and short dash lines are low fuel upshift lines that are used when it is determined that the fuel level Q_{FUEL} is low. As shown in FIG. 6, the low fuel upshift lines (i.e., the alternate long and short dash lines) are set in advance separate from the normal upshift lines in positions as if the normal upshift lines were offset to the left (i.e., the low vehicle speed side), such that a high vehicle speed side (i.e., a high gear ratio side) speed is selected in a region where the vehicle speed V is lower and in a region where the accelerator operation amount Acc is greater, for example, i.e., such that an upshift will be determined earlier, than with the normal upshift lines (i.e., the solid lines). Incidentally, the shift line graph in FIG. 6 only shows the upshift lines; the downshift lines are omitted. Of the downshift lines, low fuel downshift lines are set in advance separate from the normal downshift lines in positions as if the normal downshift lines were offset to the left (i.e., the low vehicle speed side), such that a high vehicle speed side (i.e., a high gear ratio side) speed is selected up to a region where the vehicle speed V is lower and up to a region where the accelerator operation amount Acc is greater, for example, i.e., such that a downshift will be determined later, than with the normal downshift lines.

More specifically, returning to FIG. 3, a drivable distance calculating portion, i.e., drivable distance calculating means 76, calculates the drivable distance D_{C}, i.e., the distance that the vehicle is able to travel with the current fuel level Q_{FUEL}, based on the fuel level Q_{FUEL}, for example. More specifically, the drivable distance calculating means 76 sequentially calculates most recent fuel efficiency F_{E} [km / L]. For example, the drivable distance calculating means 76 sequentially calculates the most recent fuel efficiency F_{E} from the accumulation of the fuel injection quantity and the accumulation of the running distance of the past several minutes to the past several hours during which the engine 14 has been operating, and sequentially stores that calculation result as the most recent running history, i.e., fuel efficiency history. Then the drivable distance calculating means 76 sequentially calculates the drivable distance D_{C} (= F_{E} × Q_{FUEL}) based on the most recent fuel efficiency F_{E} [km / L] and the fuel level Q_{FUEL} [L].

A low fuel determining portion, i.e., low fuel determining means 78, determines whether the fuel level Q_{FUEL} is low, for example. More specifically, the low fuel determining means 78 determines whether the fuel level Q_{FUEL} is low based on whether the drivable distance D_{C} calculated by the drivable distance calculating means 76 is equal to or less than a predetermined distance D'. This predetermined distance D' is a preset determining threshold value for determining that the fuel level Q_{FUEL} is low from the drivable distance D_{C}, for example, and is set at around 100 [km], for example. The low fuel determining means 78 also determines whether the fuel level Q_{FUEL} is low based on whether the fuel level Q_{FUEL} is equal to or less than a predetermined level Q'. This predetermined level Q' is a preset determining threshold value for directly determining that the fuel level Q_{FUEL} is low from the absolute value of the fuel level Q_{FUEL}, for example, and is set at around 10 [L], for example. Also, the low fuel determining means 78 may also determine whether the fuel level Q_{FUEL} is low based on whether the drivable distance D_{C} is equal to or less than the predetermined distance D', when it is determined that the fuel level Q_{FUEL} is not equal to or less than the predetermined level Q'. Also, the low fuel determining means 78 may also determine whether the fuel level Q_{FUEL} is low based on whether the fuel level Q_{FUEL} is equal to or less than the predetermined level Q', when it is determined that the drivable distance D_{C} is not equal to or less than the predetermined distance D'.

A distance calculating ability determining portion, i.e., distance calculating ability determining means 80, determines whether it is possible to calculate the drivable distance D_{C} by the drivable distance calculating means 76, for example, based on whether a most recent fuel efficiency F_{E}, i.e., a most recent fuel efficiency history, is stored. For example, with a vehicle such as a new vehicle that has just started running (a new vehicle whose mileage is low) or a vehicle 10 in which a battery supply has just been reconnected to the ECU 50, no most recent fuel efficiency history is stored, so it is determined by the distance calculating ability determining means 80 that there is no most recent fuel efficiency history stored.

If it is determined by the distance calculating ability determining means 80 that the drivable distance D_{C} is unable to be calculated by the drivable distance calculating means 76, the low fuel determining means 78 determines whether the fuel level Q_{FUEL} is low based on whether the fuel level, Q_{FUEL} is equal to or less than the predetermined level Q'.

When it is determined by the low fuel determining means 78 that the fuel level Q_{FUEL} is low, for example, a warning control portion, i.e., warning controlling means 82, notifies the driver that the fuel level Q_{FUEL} is low by outputting a low fuel warning signal S_{F-L} to the low fuel warning lamp 44 and illuminating the low fuel warning lamp 44.

If it has not been determined by the low fuel determining means 78 that the fuel level Q_{FUEL} is low, for example, a shift operation indication changing portion, i.e., shift operation indication changing means 84, outputs a command to the required speed calculating means 70 to calculate the required speed G_{REQ} using the normal shift line graph such as that shown in FIG. 4, for example. On the other hand, if it is determined by the low fuel determining means 78 that the fuel level Q_{FUEL} is low, the shift operation indication changing means 84 outputs a command to the required speed calculating means 70 to calculate the required speed G_{REQ} using the low fuel shift line graph such as that shown by the alternate long and short dash lines in FIG. 6, for example. Accordingly, if it is not determined that the fuel level Q_{FUEL} is low, a shift operation into a normal speed set such that driving can be performed with good fuel efficiency while obtaining sufficient performance of the vehicle 10 is indicated to the driver by the shift indicator 52. That is, if it is not determined that the fuel level Q_{FUEL} is low, a normal shift operation indication is output by the shift indicator 52. On the other hand, if it is determined that the fuel level Q_{FUEL} is low, a shift operation into a low fuel speed set such that fuel efficiency performance is given top priority over power performance is indicated to the driver by the shift indicator 52. For example, if it is determined that the fuel level Q_{FUEL} is low, the normal shift operation indication is switched to the shift operation indication to advance an upshift and the shift operation indication to delay a downshiftby the shift indicator 52.

Here, depending on the driver, it may be desirable that an indication for a normal shift operation be given even if the fuel level Q_{FUEL} is low. For example, there may be times when a normal shift operation indication is desirable, such as when the driver does not wish to sacrifice power performance and the like, or when the vehicle is near a fuel supply facility. Therefore, the vehicle 10 according to this example embodiment may also include a lamp-cancel switch 69 (see FIG. 3) that serves as a momentary type operating element for selecting whether to execute fuel efficiency priority indication control (i.e., control to indicate that priority is given to fuel efficiency) that gives a shift operation indication to shift into the low fuel speed, i.e., whether to change the normal shift operation indication to a low fuel shift operation indication. This lamp-cancel switch 69 also functions as a lamp (i.e., a fuel efficiency priority indication control lamp) that illuminates to notify the driver that fuel efficiency priority indication control is being executed.

If it is determined by the low fuel determining means 78 that the fuel level Q_{FUEL} is low, the shift operation indication changing means 84 notifies the driver that fuel efficiency priority indication control is being executed by outputting an illumination signal S_{L-ON} for illuminating the lamp-cancel switch 69 to the lamp-cancel switch 69, and illuminating the lamp-cancel switch 69.

A fuel efficiency priority indication control execution determining portion, i.e., fuel efficiency priority indication control execution determining means 86, determines whether to execute fuel efficiency priority indication control with the shift operation indication changing means 84. For example, the fuel efficiency priority indication control execution determining means 86 determines whether to execute fuel efficiency priority indication control with the shift operation indication changing means 84 based on a switch operation of the lamp-cancel switch 69. More specifically, if the lamp-cancel switch 69 has been switched (i.e., operated) after being illuminated, i.e., if a cancel signal Scancel is received from the lamp-cancel switch 69, the fuel efficiency priority indication control execution determining means 86 makes a determination to not execute fuel efficiency priority indication control with the shift operation indication changing means 84 and outputs a stop command to the shift operation indication changing means 84 to stop a command to calculate the required speed G_{REQ} using a low fuel shift line graph such as that shown by the alternate long and short dash lines in FIG. 6 from being output to the required speed calculating means 70. The shift operation indication changing means 84 then outputs a command to the required speed calculating means 70 to calculate the required speed G_{REQ} using a normal shift line graph such as that shown in FIG. 4 instead of the command to calculate the required speed G_{REQ} using the low fuel shift line graph, for example, and stops outputting the illumination signal S_{L-ON} to the lamp-cancel switch 69, according to a command from the fuel efficiency priority indication control execution determining means 86. Meanwhile, the fuel efficiency priority indication control execution determining means 86 makes a determination to execute fuel efficiency priority indication control with the shift operation indication changing means 84, and thus does not output the stop command to the shift operation indication changing means 84, until the lamp-cancel switch 69 is switched (i.e., operated) after being illuminated. In this case, the shift operation indication changing means 84 continues to output a command to calculate the required speed G_{REQ} using the low fuel shift line graph to the required speed calculating means 70, and continues to output the illumination signal S_{L-ON} to the lamp-cancel switch 69. Moreover, if the lamp-cancel switch 69 is switched (i.e., operated) while the stop command is being output, the fuel efficiency priority indication control execution determining means 86 makes a determination to execute fuel efficiency priority indication control with the shift operation indication changing means 84 and stops outputting the stop command. In this case, the shift operation indication changing means 84 again outputs a command to the required speed calculating means 70 to calculate the required speed G_{REQ} using the low fuel shift line graph, and again outputs the illumination signal S_{L-ON} to the lamp-cancel switch 69.

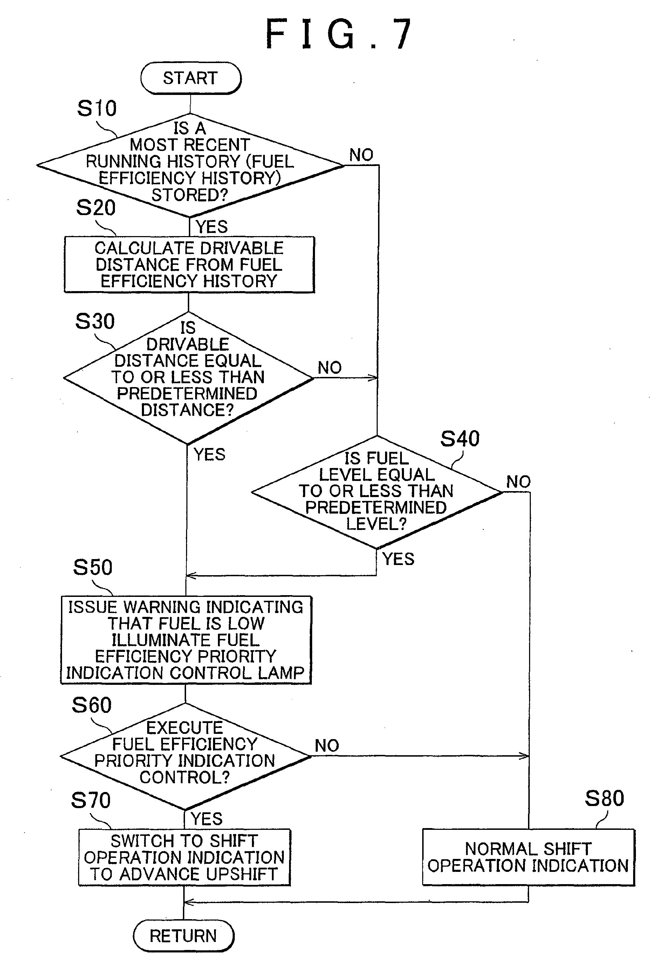

FIG. 7 is a flowchart illustrating the main portion of a control operation of the ECU 50, i.e., a control operation for indicating a shift operation into the optimum speed to the driver appropriately according to the vehicle state. This routine is repeatedly executed at extremely short cycle times of approximately several milliseconds to several tens of milliseconds, for example.

In FIG. 7, first in step S10 that corresponds to the distance calculating ability determining means 80, it is determined whether the drivable distance D_{C} is able to be calculated, based on whether a most recent fuel efficiency F_{E}, i.e., a most recent fuel efficiency history is stored, for example. If the determination in step S10 is yes, then in step S20 that corresponds to the drivable distance calculating means 76, the drivable distance D_{C} (= F_{E} × Q_{FUEL}) is sequentially calculated based on the most recent fuel efficiency F_{E} [km / L] and the fuel level Q_{FUEL} [L]. Next, in step S30 that corresponds to the low fuel determining means 78, it is determined whether the fuel level Q_{FUEL} is low based on whether the drivable distance D_{C} calculated in step S20 is equal to or less than a predetermined distance D', for example. If the determination in step S10 is no or the determination in step S30 is no, then in step S40 that also corresponds to the low fuel determining means 78, it is determined whether the fuel level Q_{FUEL} is low based on whether the fuel level Q_{FUEL} is equal to or less than a predetermined level Q'. If the determination in either step S30 is yes or the determination in step S40 is yes, then in step S50 that corresponds to the warning controlling means 82 and the shift operation indication changing means 84, a low fuel warning signal S_{F-L} is output to the low fuel warning lamp 44 and the low fuel warning lamp 44 is illuminated, for example. Simultaneously, the illumination signal S_{L-ON} is output to the lamp-cancel switch 69 and the lamp-cancel switch 69 is illuminated. Next, in step S60 that corresponds to the fuel efficiency priority indication control execution determining means 86, it is determined whether the fuel efficiency priority indication control is to be executed, based on a switch operation of the lamp-cancel switch 69. If the determination in step S60 is yes, then in step S70 that corresponds to the shift indication control portion 54 and the shift operation indication changing means 84, the command to calculate the required speed G_{REQ} using a low fuel shift line graph such as that shown by the alternate long and short dash lines in FIG. 6, for example, continues to be output and the illumination signal S_{L-ON} continues to be output to the lamp-cancel switch 69. Then a shift operation into a low fuel speed set such that priority is given to fuel efficiency performance over power performance is indicated to the driver by the shift indicator 26. For example, the normal shift operation indication is switched to a shift operation indication to advance an upshift and a shift operation indication to delay a downshift. If the determination in step S40 is no or the determination in step S60 is no, then in step S80 that also corresponds to the shift indication control portion 54 and the shift operation indication changing means 84, the command to calculate the required speed G_{REQ} using a normal shift line graph such as that shown in FIG. 4, for example, is output, and if the illumination signal S_{L-ON} is being output to the lamp-cancel switch 69, the illumination signal S_{L-ON} is stopped from being output. Then a shift operation into a normal speed that has been set such that driving is possible with good fuel efficiency while obtaining sufficient performance of the vehicle 10 is indicated to the driver by the shift indicator 26. That is, a normal shift operation indication is output.

As described above, according to this example embodiment, if it is determined that the fuel level Q_{FUEL} is low, a speed set in advance such that priority is given to fuel efficiency performance over power performance is set as the required speed G_{REQ} based on the running state of the vehicle 10. As a result, when the fuel level Q_{FUEL} is low, a shift operation into a speed in which priority is given to fuel efficiency performance over power performance is indicated to the driver. Having the driver perform a shift operation into that indicated speed enables the drivable distance D_{C} corresponding to the fuel level Q_{FUEL} to be increased. In addition, when the fuel level Q_{FUEL} is high, a shift operation into a speed that achieves both fuel efficiency performance and power performance, for example, is indicated to the driver. Having the driver perform a shift operation into the indicated speed makes it possible to appropriately ensure power performance without reducing fuel efficiency. In this way, a shift operation into the required speed G_{REQ} is indicated to the driver appropriately according to the vehicle state, e.g., the fuel level Q_{FUEL}.

Also, according to this example embodiment, the speed set in advance such that priority is given to fuel efficiency performance over power performance is a speed set in advance to the higher vehicle speed side than the required speed G_{REQ} that is selected when it is not determined that the fuel level Q_{FUEL} is low. Therefore, a shift operation into speed on the higher vehicle speed side is more apt to be indicated to the driver when the fuel level Q_{FUEL} is low than when it is not determined that the fuel level Q_{FUEL} is low. Having the driver perform a shift operation into the indicated speed makes it reliably possible to increase the drivable distance D_{C} that corresponds to the fuel level Q_{FUEL}.

Also, according to this example embodiment, if the fuel level Q_{FUEL} is equal to or less than the predetermined level Q', it is determined that the fuel level Q_{FUEL} is low. Accordingly, it is appropriately determined that the fuel level Q_{FUEL} is low, so a speed set in advance such that priority is given to fuel efficiency performance over power performance is appropriately selected as the required speed G_{REQ} based on the running state of the vehicle 10.

Also, according to this example embodiment, it is determined that the fuel level Q_{FUEL} is low when the drivable distance D_{C} calculated based on the fuel level Q_{FUEL} is equal to or shorter than the predetermined distance D', when the fuel level Q_{FUEL} is not equal to or lower than the predetermined level Q'. Thus, it can even more appropriately be determined that the fuel level Q_{FUEL} is low.

Further, according to this example embodiment, it is determined that the fuel level Q_{FUEL} is low when the drivable distance D_{C} calculated based on the fuel level Q_{FUEL} is equal to or shorter than the predetermined distance D'. Therefore, it is appropriately determined that the fuel level Q_{FUEL} is low, so a speed set in advance such that priority is given to fuel efficiency performance over power performance is appropriately set as the required speed G_{REQ} based on the running state of the vehicle 10.

Also, according to this example embodiment, the fuel level Q_{FUEL} is determined to be low when the fuel level Q_{FUEL} is equal to or lower than the predetermined level Q' when the drivable distance D_{C} is not equal to or shorter than the predetermined distance D' or that drivable distance D_{C} is unable to be calculated. Therefore, it is possible to even more appropriately determine that the fuel level Q_{FUEL} is low.

Also, according to this example embodiment, if it is determined that the fuel level Q_{FUEL} is low, the driver is notified that the fuel level Q_{FUEL} is low. Therefore, the driver is reliably notified that the fuel level Q_{FUEL} is low, so the driver is suitably notified that the current shift operation indication is an indication for a shift operation into a speed in which priority is given to fuel efficiency performance over power performance.

Also, according to this example embodiment, when the actual speed C_{REAL} of the manual transmission 18 is different than from the required speed G_{REQ}, the shift indicator 52 displays an indication of a shift operation to change the actual speed G_{REAL} to the required speed G_{REQ}. Therefore, a shift operation into the required speed G_{REQ} selected based on the running state of the vehicle 10 is appropriately indicated to the driver.

Also, according to the example embodiment, if a determination is made to not execute the fuel efficiency priority indication control that indicates, based on the running state of the vehicle 10, a speed set in advance such that priority is given to fuel efficiency performance over power performance as the required speed G_{REQ}, when it is determined that the fuel level Q_{FUEL} is low, a speed when it is not determined that the fuel level Q_{FUEL} is low is selected as the required speed G_{REQ}. Therefore, a speed set in advance such that priority is given to fuel efficiency performance over power performance and a normal speed when it is not determined that the fuel level Q_{FUEL} is low are appropriately indicated.

Also, more preferably, the lamp-cancel switch 69 that is operated for selecting whether to execute the fuel efficiency priority indication control is provided, and a determination is made to not execute the fuel efficiency priority indication control when the lamp-cancel switch 69 operated. Therefore, a speed selected in advance such that priority is given to fuel efficiency performance over power performance according to the intention of the driver, for example, and a normal speed when it is not determined that the fuel level Q_{FUEL} is low are indicated appropriately.

Next, another example embodiment of the invention will be described. Incidentally, in the description below, portions that are common to the example embodiment described above will be denoted by the same reference characters and descriptions of those portions will be omitted.

### [Second example embodiment]

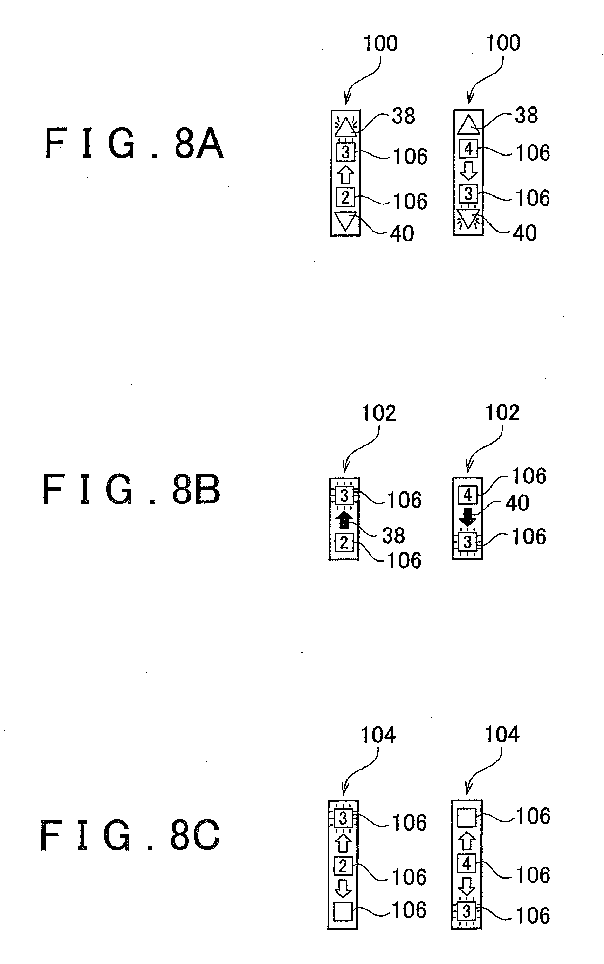

The shift indicator 26 in the first example embodiment described above includes the upshift indicator lamp 38 and the downshift indicator lamp 40 and displays an indication of a shift operation with the shift lever 68 to the driver. In this second example embodiment, a speed indicating portion 106 for directly indicating the actual speed G_{REAL} and the required speed G_{REQ} is provided instead of, or in addition to, the upshift indicator lamp 38 and the downshift indicator lamp 40. Various examples of shift indicators for displaying an indication of a shift operation with the shift lever 68 to the driver will now be illustrated. FIGS. 8A, 8B, and 8C are views of examples of shift indicators that are different than the shift indicator 26. A shift indicator 100 shown in FIG. 8A includes, in addition to the upshift indicator lamp 38 and the downshift indicator lamp 40, a speed indicating portion 106 for indicating both the actual speed G_{REAL} and the required speed G_{REQ}. In this shift indicator 100, the speed indicating portion 106 on the side where the upshift indicator lamp 38 or the downshift indicator lamp 40 is illuminated displays the required speed G_{REQ}, while the speed indicating portion 106 on the side where the upshift indicator lamp 38 or the downshift indicator lamp 40 is not illuminated displays the actual speed G_{REAL}. Also, a shift indicator 102 shown in FIG. 8B includes, in addition to the upshift indicator lamp 38 and the downshift indicator lamp 40, a speed indicating portion 106 for indicating both the actual speed G_{REAL} and the required speed G_{REQ}. In this shift indicator 102, the speed indicating portion 106 that is illuminated displays the required speed G_{REQ}, while the speed indicating portion 106 that is not illuminated displays the actual speed G_{REAL}, and the arrow that changes direction with an upshift and a downshift corresponds to the upshift indicator lamp 38 and the downshift indicator lamp 40. A shift indicator 104 shown in FIG. 8C includes, instead of the upshift indicator lamp 38 and the downshift indicator lamp 40, a speed indicating portion 106 for indicating both the actual speed G_{REAL} and the required speed G_{REQ}. In this shift indicator 104, the speed indicating portion 106 that is illuminated displays the required speed G_{REQ}, while the speed indicating portion 106 in the center displays the actual speed G_{REAL}.

### [Third example embodiment]

In the example embodiment described above, the manual transmission 18 is given as an example of a transmission in which the speed is changed by a shift operation performed by the driver. Alternatively, however, another transmission, such as an automatic transmission having a manual shift running mode (i.e., a manual shift mode), for example, may also be used as the transmission in which the speed is changed by a shift operation performed by the driver.

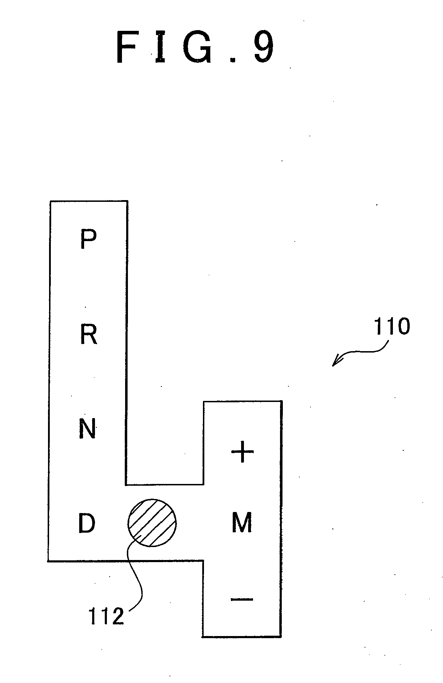

FIG. 9 is a view of an example of a shift operation apparatus 110 used in an automatic transmission having the manual shift mode, as a switching apparatus that changes one shift position P_{SH} among a plurality of various shift positions P_{SH} to the other shift position P_{SH} by a manual operation. This shift operation apparatus 110 includes a shift lever 112 that is arranged next to the driver's seat, for example, and is operated to select one of a plurality of various shift positions P_{SH}.

This shift lever 112 is provided so as to be manually operated into any one of five positions, i.e., a park position "P (Park)" that places the transmission in a neutral state in which the power transmission path within the automatic transmission is interrupted, and locks the output shaft of the automatic transmission; a reverse running position "R (Reverse)" for running in reverse; a neutral position "N (Neutral)" for placing the transmission in a neutral state in which the power transmission path within the automatic transmission is interrupted; a forward automatic shift running position "D (Drive)" that executes automatic shift control among the speeds of the automatic transmission able to be shifted into or within a range within which the speed ratio can be changed; and a forward manual shift running position "M (Manual)" for establishing a manual shift mode and setting a so-called manual range that restricts the use of a high speed side (i.e., high vehicle speed side) speed or speed ratio in the automatic shift control. Of the shift positions P_{SH} indicated by the "P" through "M" positions described above, the "P" position and the "N" position are non-running positions that are selected when the vehicle is not to be run, as well as non-driving positions for selecting a switch to a power transmission interrupted state of the power transmission path that renders the vehicle 10 unable to be driven. Also, the "R" position, the "D" position, and the "M" position are running positions that are selected when running the vehicle 10, as well as driving positions for selecting a switch to a power transmittable state of the power transmission path that enables the vehicle 10 to be driven.

In particular, the "M" position is provided in the same position as the "D" position in the longitudinal direction of the vehicle 10, and adjacent to the "D" position in the width direction of the vehicle 10. Either the "D" range or the "L" range is changed according to the operation of the shift lever 112 in response to the shift lever 112 being operated into the "M" position. More specifically, the "M" position is provided with an upshift position "+" and a downshift position "-" in the longitudinal direction of the vehicle 10. When the shift lever 112 is operated into the upshift position "+" or the downshift position "-", a switch is made to the "D" range or the "L" range. Accordingly, it is possible to shift into a desired shift range based on user operation of the shift lever 112. For example, the plurality of shift ranges within the "D" range and the "L" range in the M position are a plurality of various shift ranges with different speeds or speed ratios on the high vehicle speed side (i.e., the smallest speed ratio side), within the range where speeds or speed ratios can be changed by automatic shift control of the automatic transmission. This plurality of shift ranges limits the shift range of the speeds such that the highest vehicle speed side speeds into which the automatic transmission can shift are different. Also, the shift lever 112 is structured to automatically return to the "M" position from the upshift position "+" and the "-" position by urging means such as a spring. For example, when the "M" position has been selected by an operation of the shift lever 112, automatic shift control is performed over a range of speeds or speed ratios that are able to be used with each shift range of the automatic transmission, so as not to use a high speed side speed that is restricted from being used, or so as not to exceed a speed ratio that is restricted from being used, in each shift range.

Incidentally, in the example embodiment described above, the highest vehicle speed side shift range is set (i.e., that shift range is fixed) by the shift lever 112 being operated to the "M" position. Alternatively, however, the speed (i.e., gear ratio) may be specified (i.e., the gear ratio may be fixed) based on an operation of the shift lever 112. In this case, shift control may be executed such that each time there is a manual shift operation in the automatic transmission, the desired speed corresponding to the operation is established.

Heretofore, example embodiments of the invention have been described in detail with reference to the accompanying drawings. However, the invention may also be applied in other modes.

For example, in the example embodiments described above, the fuel efficiency priority indication control execution determining means 86 (i.e., step S60 in FIG. 7) determines whether to execute fuel efficiency priority indication control with the shift operation indication changing means 84, based on a switch operation of the lamp-cancel switch 69. Alternatively, however, the fuel efficiency priority indication control execution determining means 86 (i.e., step S60 in FIG. 7) may determine whether to execute fuel efficiency priority indication control based on something other than the switch operation. For example, the fuel efficiency priority indication control execution determining means 86 (i.e., step S60 in FIG. 7) may determine whether to execute fuel efficiency priority indication control based on whether an actual shift operation by a driver follows a shift operation indication by the shift indicator 52. More specifically, the fuel efficiency priority indication control execution determining means 86 determines whether an actual shift operation by the driver follows a shift operation indication by the shift indicator 52 based on whether a ratio (= Tsh / Teng) of the time Tsh for which the shift operation indication by the shift indicator 52 is indicated and the time Teng that the engine has been operating is less than a predetermined indication time ratio obtained in advance for determining that an actual shift operation by the driver follows a shift operation indication by the shift indicator 52. If the fuel efficiency priority indication control execution determining means 86 determines that an actual shift operation by a driver does not follow a shift operation indication by the shift indicator 52, the fuel efficiency priority indication control execution determining means 86 makes a determination to not execute the fuel efficiency priority indication control. If, on the other hand, the fuel efficiency priority indication control execution determining means 86 determines that an actual shift operation by the driver does follow a shift operation indication by the shift indicator 52, the fuel efficiency priority indication control execution determining means 86 makes a determination to execute the fuel efficiency priority indication control. In this way as well, similar to the example embodiments described above, a speed set in advance such that priority is given to fuel efficiency performance over power performance and a normal speed when it is not determined that the fuel level Q_{FUEL} is low are able to be appropriately indicated.

Also, in the example embodiments described above, the fuel efficiency priority indication control is executed uniformly on any type of road. Alternatively, however, it may be determined whether the vehicle is traveling on an ordinary road or on an expressway based on the vehicle speed V, the successive running time without stopping, and navigation information, and the like, and the predetermined distance D' and predetermined level Q' may be changed accordingly.

Also, in the example embodiment described above, it is determined whether the lamp-cancel switch 69 has been switched (i.e., operated) after being illuminated. Alternatively, however, a non-momentary type lockable cancel switch may be provided and it may be determined whether a switch operation has been performed irrespective of whether it is before or after the switch is illuminated.

Also, in the example embodiment described above, the low fuel determining means 78 determines whether the fuel level Q_{FUEL} is low according to whether the drivable distance D_{C} is equal to or less than the predetermined distance D', or whether the fuel level Q_{FUEL} is equal to or lower than the predetermined level Q'. Alternatively, however, the low fuel determining means 78 may determine whether the fuel level Q_{FUEL} is low by determining whether both of those conditions are satisfied.

Also, in the example embodiment described above, it is assumed that at least normal fuel efficiency priority indication control is executed. However, when this is not assumed, it is also possible to not execute the normal fuel efficiency priority indication control if so desired by the user, for example. If normal fuel efficiency priority indication control is not executed in this way, it is also possible to forcibly execute low fuel-fuel efficiency priority indication control when it is determined that the fuel level Q_{FUEL} is low.

Also, in the example embodiment described above, the most recent fuel efficiency F_{E} [km / L] is used to calculate the drivable distance D_{C}. However, various other methods are also possible. For example, the average fuel efficiency F_{AVE} [ km / L] calculated from the cumulative running distance and the cumulative fuel injection quantity after the battery supply has been connected to the vehicle drive unit 50 or after the fuel consumption data has been reset may be used.

Also, in the example embodiment described above, the shift levers 68 and 112 for performing shift operations are provided, but instead of these shift levers 68 and 112, a switch that is able to perform a shift operation, such as a push-button type switch or a slide type switch, may be used, or a device capable of performing a shift operation in response to the voice of the driver rather than by a manual operation, or a device capable of performing a shift operation in response to a foot operation, or other device may also be used.

Incidentally, the example embodiments described above are merely examples. That is, the invention may be carried out in modes that have been modified or improved in any of a variety of ways based on the knowledge of one skilled in the art.
In control for a vehicle provided with a transmission in which a speed or shift range is changed by a shift operation performed by a driver, and a shift indicator that indicates a shift operation into an optimum speed or shift range selected based on a running state of the vehicle to the driver, it is determined whether an amount of fuel remaining in a fuel tank (64) is low, and if it is determined that the amount of fuel remaining is low, a speed or shift range set in advance such that priority is given to fuel efficiency performance over power performance is selected as the optimum speed or shift range based on the running state of the vehicle (10).

## Claims

1. A control apparatus for a vehicle provided with a transmission in which a speed or shift range is changed by a shift operation performed by a driver, and a shift indicator that indicates a shift operation into an optimum speed or shift range selected based on a running state of the vehicle to the driver, **characterized in that**:
the control apparatus selects, based on the running state of the vehicle (10), a speed or shift range set in advance such that priority is given to fuel efficiency performance over power performance as the optimum speed or shift range, if it is determined that an amount of fuel remaining in a fuel tank (64) is low.

2. The control apparatus according to claim 1, wherein the speed or shift range set in advance such that priority is given to fuel efficiency performance over power performance is a speed or a shift range set in advance on the high vehicle speed side compared to the optimum speed or shift range selected when it is not determined that the amount of fuel remaining in the fuel tank (64) is low.

3. The control apparatus according to claim 1 or 2, wherein it is determined that the amount of fuel remaining is low when the amount of fuel remaining in the fuel tank (64) is equal to or less than a predetermined amount.

4. The control apparatus according to claim 3, wherein it is determined that the amount of fuel remaining is low when a drivable distance calculated based on the amount of fuel remaining is equal to or less than a predetermined distance, when the amount of fuel remaining in the fuel tank (64) is not equal to or less than the predetermined amount. '

5. The control apparatus according to claim 1 or 2, wherein it is determined that the amount of fuel remaining is low when a drivable distance calculated based on the amount of fuel remaining in the fuel tank (64) is equal to or less than a predetermined distance.

6. The control apparatus according to claim 5, wherein it is determined that the amount of fuel remaining is low when the amount of fuel remaining in the fuel tank (64) is equal to or less than a predetermined amount, when the drivable distance is not equal to or less than the predetermined distance or when the drivable distance is not able to be calculated.

7. The control apparatus according to any one of claims 1 to 6, wherein the driver is notified that the amount of fuel remaining is low when it is determined that the amount of fuel remaining in the fuel tank (64) is low.

8. The control apparatus according to any one of claims 1 to 7, wherein the shift indicator (26) displays a shift operation indication to change the actual speed or shift range to the optimum speed or shift range when the actual speed or shift range of the transmission (18) is different than the optimum speed or shift range.

9. The control apparatus according to any one of claims 1 to 8, wherein a speed or shift range when it is not determined that the amount of fuel remaining in the fuel tank (64) is low is selected as the optimum speed or shift range when a determination has been made to not execute fuel efficiency priority indication control, in which a speed or shift range set in advance such that priority is given to fuel efficiency performance over power performance is displayed as the optimum speed or shift range based on the running state of the vehicle (10), when it is determined that the amount of fuel remaining in the fuel tank (64) is low.

10. The control apparatus according to claim 9, further comprising:
a cancel switch (69) that is operated to select whether to execute the fuel efficiency priority indication control,
wherein a determination is made to not execute the fuel efficiency priority indication control when the cancel switch (69) is operated.

11. The control apparatus according to claim 9, wherein a determination is made to not execute the fuel efficiency priority indication control when it is determined that an actual shift operation by the driver does not follow the shift operation indication.

12. A control method for a vehicle provided with a transmission in which a speed or shift range is changed by a shift operation performed by a driver, and a shift indicator that indicates a shift operation into an optimum speed or shift range selected based on a running state of the vehicle to the driver, **characterized by** comprising:
determining whether an amount of fuel remaining in a fuel tank (64) is low; and
selecting, based on the running state of the vehicle (10), a speed or shift range set in advance such that priority is given to fuel efficiency performance over power performance as the optimum speed or shift range, if it is determined that the amount of fuel remaining in a fuel tank (64) is low.

## Patentansprüche

1. Steuervorrichtung für ein Fahrzeug, das mit einem Getriebe, in dem eine Drehzahl oder ein Schaltbereich durch eine von einem Fahrer durchgeführten Schaltoperation geändert wird, und einer Schaltanzeige, die eine Schaltoperation in eine/n optimale/n Drehzahl oder Schaltbereich, die gemäß einem Fahrzustand des Fahrzeugs ausgewählt wird, dem Fahrer anzeigt, ausgestattet ist, **dadurch gekennzeichnet, dass**:
die Steuervorrichtung basierend auf dem Fahrzustand des Fahrzeugs (10) eine Drehzahl oder einen Schaltbereich zuvor derart als die/der optimale Drehzahl oder Schaltbereich einstellt, dass einer Kraftstoffeffizienzeigenschaft gegenüber einer Leistungseigenschaft eine Priorität eingeräumt wird, wenn bestimmt wird, dass eine in einem Kraftstofftank (64) verbleibende Kraftstoffmenge niedrig ist.

2. Steuervorrichtung gemäß Anspruch 1, wobei die/der zuvor derart eingestellte Drehzahl oder Schaltbereich, dass einer Kraftstoffeffizienzeigenschaft gegenüber einer Leistungseigenschaft eine Priorität eingeräumt wird, ein/e zuvor eingestellte/r Drehzahl oder Schaltbereich seitens der hohen Fahrzeuggeschwindigkeit im Vergleich mit der/dem ausgewählten Drehzahl oder Schaltbereich ist, die/der ausgewählt wird, wenn bestimmt wird, dass die in dem Kraftstofftank (64) verbleibende Kraftstoffmenge niedrig ist.

3. Steuervorrichtung gemäß Anspruch 1 oder 2, wobei bestimmt wird, dass die verbleibende Kraftstoffmenge niedrig ist, wenn die in dem Kraftstofftank (64) verbleibende Kraftstoffmenge kleiner oder gleich einer vorbestimmten Menge ist.

4. Steuervorrichtung gemäß Anspruch 3, wobei bestimmt wird, dass die verbleibende Kraftstoffmenge niedrig ist, wenn eine basierend auf der verbleibenden Kraftstoffmenge berechnete fahrbare Distanz kleiner oder gleich einer vorbestimmten Distanz ist, wenn die in dem Kraftstofftank (64) verbleibende Kraftstoffmenge nicht kleiner oder gleich der vorbestimmten Menge ist.

5. Steuervorrichtung gemäß Anspruch 1 oder 2, wobei bestimmt wird, dass die verbleibende Kraftstoffmenge niedrig ist, wenn eine basierend auf der verbleibenden Kraftstoffmenge berechnete fahrbare Distanz kleiner oder gleich einer vorbestimmten Distanz ist.

6. Steuervorrichtung gemäß Anspruch 5, wobei bestimmt wird, dass die verbleibende Kraftstoffmenge niedrig ist, wenn die in dem Kraftstofftank (64) verbleibende Kraftstoffmenge kleiner oder gleich einer vorbestimmten Menge ist, wenn die fahrbare Distanz nicht kleiner oder gleich der vorbestimmten Distanz ist, oder es nicht möglich ist, die fahrbare Distanz zu berechnen.

7. Steuervorrichtung gemäß einem der Ansprüche 1 bis 6, wobei der Fahrer benachrichtigt wird, dass die verbleibende Kraftstoffmenge niedrig ist, wenn bestimmt wird, dass verbleibende Kraftstoffmenge in dem Kraftstofftank (64) niedrig ist.

8. Steuervorrichtung gemäß einem der Ansprüche 1 bis 7, wobei die Schaltanzeige (26) eine Schaltoperationanzeige zum Ändern der/der gegenwärtigen Drehzahl oder Schaltbereich auf die/den optimalen Drehzahl oder Schaltbereich anzeigt, wenn die/der gegenwärtige Drehzahl oder Schaltbereich des Getriebes (18) sich von der/dem optimalen Drehzahl oder Schaltbereich unterscheidet.

9. Steuervorrichtung gemäß einem der Ansprüche 1 bis 8, wobei ein/e Drehzahl oder Schaltbereich, wenn nicht bestimmt wird, dass die in dem Kraftstofftank (**64**) verbleibenden Kraftstoffmenge niedrig ist, als die/der optimale Drehzahl oder Schaltbereich ausgewählt wird, wenn eine Bestimmung getroffen wurde, eine Kraftstoffeffizienzprioritätsanzeigesteuerung, bei der ein/e Drehzahl oder Schaltbereich, die/der derart zuvor eingestellt wird, dass einer Kraftstoffeffizienzeigenschaft gegenüber einer Leistungseigenschaft eine Priorität eingeräumt wird, nicht auszuführen, als die/der optimale Drehzahl oder Schaltbereich basierend auf dem Fahrzustand des Fahrzeugs (**10**) angezeigt wird, wenn bestimmt wird, dass die in dem Kraftstofftank (**64**) verbleibende Kraftstoffmenge niedrig ist.

10. Steuervorrichtung gemäß Anspruch 9, weiterhin mit:
einem Beendigungsschalter (**69**) der zum Auswählen betätigt wird, ob die Kraftstoffeffizienzprioritätsanzeigesteuerung auszuführen ist,
wobei eine Bestimmung getroffen wird, die Kraftstoffeffizienzprioritätsanzeigesteuerung nicht auszuführen, wenn der Beendigungsschalter (**69**) betätigt wird.

11. Steuervorrichtung gemäß Anspruch 9, wobei eine Bestimmung getroffen wird, die Kraftstoffeffizienzprioritätsanzeigesteuerung nicht auszuführen, wenn bestimmt wird, dass eine gegenwärtige Schaltoperation durch den Fahrer nicht der Schaltoperationanzeige folgt.

12. Steuerverfahren für ein für ein Fahrzeug, das mit einem Getriebe, in dem eine Drehzahl oder ein Schaltbereich durch eine von einem Fahrer durchgeführten Schaltoperation geändert wird, und einer Schaltanzeige, die eine Schaltoperation in eine/n optimale/n Drehzahl oder Schaltbereich, die gemäß einem Fahrzustand des Fahrzeugs ausgewählt wird, dem Fahrer anzeigt, ausgestattet ist, **gekennzeichnet durch**:
Bestimmen, ob eine in einem Kraftstofftank (**64**) verbleibende Kraftstoffmenge niedrig ist; und
Auswählen, basierend auf dem Fahrzustand des Fahrzeugs (**10**), einer/s zuvor derart eingestellten Drehzahl oder Schaltbereichs als die/der optimale Drehzahl oder Schaltbereich, dass einer Kraftstoffeffizienzeigenschaft gegenüber einer Leistungseigenschaft eine Priorität eingeräumt wird, wenn bestimmt wird, dass die in dem Kraftstofftank (**64**) verbleibende Kraftstoffmenge niedrig ist.

## Revendications

1. Appareil de commande pour un véhicule muni d'une transmission où une gamme de vitesse ou de changement de vitesse est modifiée par un actionnement de changement de vitesse effectué par un conducteur, et un voyant de changement de vitesse qui indique un actionnement de changement de vitesse dans une gamme de vitesse optimale ou de changement de vitesse optimale choisie sur la base d'un état de fonctionnement du véhicule pour le conducteur, **caractérisé en ce que** :
l'appareil de commande choisit, sur la base de l'état de fonctionnement du véhicule (10), une gamme de vitesse ou de changement de vitesse fixée à l'avance de sorte que la priorité soit donnée à la performance de rendement énergétique sur la performance de puissance comme étant la gamme de vitesse optimale ou de changement de vitesse optimale, si il est déterminé qu'une quantité de carburant restant dans un réservoir de carburant (64) est faible.

2. Appareil de commande selon la revendication 1, dans lequel la gamme de vitesse ou de changement de vitesse fixée à l'avance, de sorte que la priorité soit donnée à la performance de rendement énergétique sur la performance de puissance, est une gamme de vitesse ou de changement de vitesse fixée à l'avance sur le côté à grande vitesse de véhicule par rapport à la gamme de vitesse optimale ou de changement de vitesse optimale choisie lorsqu'il n'est pas déterminé que la quantité de carburant restant dans le réservoir de carburant (64) est faible.

3. Appareil de commande selon la revendication 1 ou 2, dans lequel il est déterminé que la quantité de carburant restant est faible lorsque la quantité de carburant restant dans le réservoir de carburant (64) est inférieure ou égale à une quantité prédéterminée.

4. Appareil de commande selon la revendication 3, dans lequel il est déterminé que la quantité de carburant restant est faible lorsqu'une distance pouvant être entraînée calculée sur la base de la quantité de carburant restant est inférieure ou égale à une distance prédéterminée, lorsque la quantité de carburant restant dans le réservoir de carburant (64) n'est pas inférieure ou égale à la quantité prédéterminée.

5. Appareil de commande selon la revendication 1 ou 2, dans lequel il est déterminé que la quantité de carburant restant est faible lorsqu'une distance pouvant être entraînée calculée sur la base de la quantité de carburant restant dans le réservoir de carburant (64) est inférieure ou égale à une distance prédéterminée.

6. Appareil de commande selon la revendication 5, dans lequel il est déterminé que la quantité de carburant restant est faible lorsque la quantité de carburant restant dans le réservoir de carburant (64) est inférieure ou égale à une quantité prédéterminée, lorsque la distance pouvant être entraînée n'est pas inférieure ou égale à la distance prédéterminée ou lorsque la distance pouvant être entraînée ne peut pas être calculée.

7. Appareil de commande selon l'une quelconque des revendications 1 à 6, dans lequel le conducteur est informé que la quantité de carburant restant est faible lorsqu'il est déterminé que la quantité de carburant restant dans le réservoir de carburant (64) est faible.

8. Appareil de commande selon l'une quelconque des revendications 1 à 7, dans lequel le voyant de changement de vitesse (26) affiche une indication d'actionnement de changement de vitesse pour changer la gamme de vitesse effectives ou de changement de vitesse effective par la gamme de vitesse optimale ou de changement de vitesse optimale lorsque la gamme de vitesse effectives ou de changement de vitesse effective de la transmission (18) est différente de la gamme de vitesse optimale ou de changement de vitesse optimale.

9. Appareil de commande selon l'une quelconque des revendications 1 à 8, dans lequel une gamme de vitesse ou de changement de vitesse, lorsqu'il n'est pas déterminé que la quantité de carburant restant dans le réservoir de carburant (64) est faible, est choisie comme étant la gamme de vitesse optimale ou de changement de vitesse optimale lorsque une détermination a été réalisée pour ne pas exécuter la commande d'indication de priorité de rendement énergétique, où une gamme de vitesse ou de changement de vitesse fixée à l'avance de sorte que la priorité soit donnée à la performance de rendement énergétique sur la performance de puissance est affichée comme étant la gamme de vitesse optimale ou de changement de vitesse optimale sur la base de l'état de fonctionnement du véhicule (10), lorsqu'il est déterminé que la quantité de carburant restant dans le réservoir de carburant (64) est faible.

10. Appareil de commande selon la revendication 9, comprenant en outre :
un commutateur d'annulation (69) qui est actionné pour choisir si la commande d'indication de priorité de rendement énergétique est à exécuter,
où la détermination est réalisée pour ne pas exécuter la commande d'indication de priorité de rendement énergétique lorsque le commutateur d'annulation (69) est actionné.

11. Appareil de commande selon la revendication 9, dans lequel une détermination est réalisée pour ne pas exécuter la commande d'indication de priorité de rendement énergétique lorsqu'il est déterminé qu'un actionnement de changement de vitesse effective par le conducteur ne suit pas l'indication d'actionnement de changement de vitesse.

12. Procédé de commande pour un véhicule muni d'une transmission où une gamme de vitesse ou de changement de vitesse est modifiée par un actionnement de changement de vitesse effectué par un conducteur, et un voyant de changement de vitesse qui indique un actionnement de changement de vitesse dans une gamme de vitesse optimale ou de changement de vitesse optimale choisie sur la base d'un état de fonctionnement du véhicule pour le conducteur, **caractérisé en ce qu'**il comprend le fait :
de déterminer si une quantité de carburant restant dans un réservoir de carburant (64) est faible ; et
de choisir, sur la base de l'état de fonctionnement du véhicule (10), une gamme de vitesse ou de changement de vitesse fixée à l'avance de sorte que la priorité soit donnée à la performance de rendement énergétique sur la performance de puissance comme étant la gamme de vitesse optimale ou de changement de vitesse optimale, si il est déterminé que la quantité de carburant restant dans un réservoir de carburant (64) est faible.
